(19) Europäisches Patentamt
European Patent Office
Office européen des brevets

(11) **EP 2 991 006 A1**

(12) **EUROPEAN PATENT APPLICATION**

(43) Date of publication:
**02.03.2016 Bulletin 2016/09**

(51) Int Cl.:
**G06Q 10/06** *(2012.01)* **H04W 4/02** *(2009.01)*

(21) Application number: **14290256.8**

(22) Date of filing: **28.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Templ, Wolfgang**
**70435 Stuttgart (DE)**
• **Kopp, Dieter**
**70435 Stuttgart (DE)**

(74) Representative: **Louis Pöhlau Lohrentz**
**Patentanwälte**
**Postfach 30 55**
**90014 Nürnberg (DE)**

(54) **Method for providing local risk level information**

(57) The invention concerns a method for providing local individual risk level information, the method comprising collecting, by a cloud-based database (1), data on one or more local risk potentials (2, 3) and calculating local risk levels ( based on the one or more local risk potentials (2, 3). The inventions concerns further a mobile device (7) comprising a control unit adapted to retrieve data on local risk potentials (2, 3) and to calculate personal local risk levels (9) based on the one or more local risk potentials (2, 3). The invention concerns further a system used for providing local risk level information, the system being adapted, in particular by a cloud-based database (1), to collect data on one or more local risk potentials (2, 3) and, in particular by a cloud-based server (10), to calculate local risk levels based on the one or more local risk potentials (2, 3). The invention concerns further a software product adapted to execute the method for providing local risk level information, when executed on a computer.

*Fig. 1*

**Description**

Field of the invention

The invention relates to the field of providing information about dangerous and safe locations, in particular of providing local risk level information for a user by means of a mobile device in connection with a cloud-based database.

Background

To provide some kind of security for a person, security applications have been developed, which in case of an accident enable a security call to an emergency service by means of a mobile phone, which also indicates the local position of the person having an accident. However, these applications only react in case an accident has already happened.

Therefore, there is a need for providing an at least improved method for protecting a person against danger and accident.

Summary of the Invention

The objective of the invention is achieved by a method for providing local risk level information. The method comprises collecting by a cloud-based database data on one or more local risk potentials and calculating local risk levels based on the one or more local risk potentials.

The objective of the invention is further achieved by a mobile device comprising a control unit adapted to retrieve data on one or more local risk potentials and to calculate individual local risk levels based on the one or more local risk potentials.

The objective of the invention is further achieved by a system used for providing local risk level information. The system is adapted to collect data on one or more local risk potentials and to calculate local risk levels based on the one or more local risk potentials.

The objective of the invention is further achieved by a software product adapted to execute the method for providing local risk level information, when the software product is executed on a computer.

The features of the invention might be implemented by the use of hardware, software or combination thereof.

Further features and advantages of the invention are achieved by preferred embodiments.

The preferred embodiments are not restrictive, but combinable so to form further preferred embodiments.

In a preferred embodiment, the local risk levels are calculated as individual local risk levels, wherein for calculating individual local risk levels additional steps are implemented in comparison to calculating local risk levels. One or more of the steps for implementing individual local risk levels which are implemented in addition to the steps of calculating local risk levels might be implemented before or after the steps which are implemented for calculating local risk levels. In other words, what is described herein with respect to local risk levels applies analogously for the individual local risk levels (and vice versa) with the exception that for calculating individual local risk levels individual risk parameters are taken into account (what is not done for calculating local risk levels). Again in other words, what is described herein with respect to local risk levels applies analogously for the individual local risk levels (and vice versa) taking into account that for calculating individual local risk levels additional steps are implemented which are not implemented for local risk levels, namely for calculating individual local risk levels individual risk parameters are taken into account what is not done for local risk levels.

In a preferred embodiment, individual local risk levels are calculated from the local risk potentials and individual risk parameters of a user.

Preferably, the wording "calculating from" and "calculating out" is used as having the same meaning.

In a preferred embodiment, an individual risk level map is generated from the calculated individual local risk levels. The individual risk level map shows a landscape of individual local risk levels.

In a preferred embodiment, a mobile device provides pictures on a display of the mobile device indicating personal local risk levels calculated from the individual local risk levels and a determined geographical location of the user.

In a preferred embodiment, a mobile device provides acoustic signals generated by the mobile device indicating personal local risk levels calculated from the individual local risk levels and a determined geographical location of the user.

In a preferred embodiment, a mobile device provides pictures and acoustic signals indicating personal local risk levels calculated from the individual local risk levels and a determined geographical location of the user.

In a preferred embodiment, the personal local risk levels are calculated by the mobile device.

In a preferred embodiment, the personal local risk levels are calculated by a cloud-based server.

In a preferred embodiment, the geographical location of a user is determined by the mobile device and transmitted from the mobile device to the cloud-based server.

The feature "cloud-based" is preferably understood in that the cloud-based database and the cloud-based server are implemented by resources, e.g. data storage and data processing resources, respectively, of one or more computers which are usually physically distributed and grouped together as virtual resources.

This means, the feature "cloud-based" in the context of the cloud-based database is preferably understood in that the cloud-based database is implemented by resources, e.g. data storage resources, of one or more computers which are usually physically distributed and grouped together as virtual resources. In other words, the cloud-based database is a database which is implemented by resources, e.g. data storage resources, of one or more computers which are usually physically distributed and grouped together as virtual resources.

Analogously, the feature "cloud-based" in the context of the cloud-based server is preferably understood in that the cloud-based server is implemented by resources, e.g. data processing resources, of one or more computers which are usually physically distributed and grouped together as virtual resources. In other words, the cloud-based server is a server which is implemented by resources, e.g. data processing resources, of one or more computers which are usually physically distributed and grouped together as virtual resources.

In a preferred embodiment, the cloud-based server determines the geographical location of the user by means of the mobile device.

In a preferred embodiment, the one or more local risk potentials comprise risk factors. In a preferred embodiment, the one or more local risk potentials comprise safety factors. The risk factors could be also termed negative risk potentials and the safety factors could be also termed positive risk potentials.

A risk factor indicates a danger, in particular at a specific location.

A safety factor indicates a safety, in particular an enhanced safety (enhanced over a neutral level), in particular at a specific location.

In a preferred embodiment, the one or more risk factors are based on data of one or more of the group of: weather conditions, crime statistics, any further statistics (e.g. traffic), experiences shared in community systems, road conditions, accident rates, wherein the one or more risk factors are based on previous, present and/or expected conditions.

In a preferred embodiment, the one or more safety factors are based on data of one or more of the group of: a presence of police, of a street cleaning unit, of a maintenance entity, wherein the one or more safety factors are based on previous, present and/or expected conditions.

Previous conditions are data, which might be called historical data, because they already happened in the past. Expected conditions might be based on forecasts (e.g. weather).

Preferably, a safety factor is a factor which reduces and/or eliminates a danger caused by a risk factor.

Preferably, collecting data on one or more local risk potentials comprises:

- gathering data about one or more risk factors, in particular based on weather conditions, crime statistics, experiences shared in community systems, road conditions, accident rates, wherein the one or more risk factors are based on previous, present and/or expected conditions; and/or
- gathering data about one or more safety factors, wherein a safety factor reduces and/or eliminates a danger caused by a risk factor, wherein safety factors comprise in particular a presence of police, of a street cleaning unit, of a maintenance entity, wherein the one or more safety factors are based on previous, present and/or expected conditions.

Preferably, a safety factor is a factor which reduces and/or eliminates a specific danger caused by a corresponding risk factor.

Preferably, collecting data on one or more local risk potentials comprises:

- gathering data about one or more risk factors, in particular based on weather conditions, crime statistics, experiences shared in community systems, road conditions, accident rates, wherein the one or more risk factors are based on previous, present and/or expected conditions; and/or
- gathering data about one or more safety factors, wherein a safety factor reduces and/or eliminates a specific danger caused by a corresponding risk factor, wherein safety factors comprise in particular a presence of police, of a street cleaning unit, of a maintenance entity, wherein the one or more safety factors are based on previous, present and/or expected conditions.

In a preferred embodiment, calculating local risk levels based on the one or more local risk potentials comprises summing up the local risk potentials of a particular location of one or more locations to a respective local risk level of said location.

In a preferred embodiment, calculating local risk levels based on the one or more local risk potentials comprises summing up the local risk potentials for each location of a plurality of locations to a respective local risk level of said location. Preferably, the respective local risk level is the sum of the local risk potentials of a particular location.

Preferably, the local risk level of a particular location is the sum of the one or more local risk potentials of said location.

In a preferred embodiment, calculating local risk levels based on the one or more local risk potentials comprises: for each location of a plurality of locations, summing up the one or more local risk potentials of said location to a respective local risk level.

In a preferred embodiment, calculating local risk levels based on the one or more local risk potentials comprises: summing up the local risk potentials assigned to a particular location of a plurality of locations to respective local risk levels for the respective location of the plurality of locations.

In a preferred embodiment, the one or more local risk potentials comprise static local risk potentials.

In a preferred embodiment, one or more of the local risk potentials are dynamically changing and the local risk levels are re-calculated based on the one or more dynamically changing local risk potentials.

In a preferred embodiment, the one or more dynamically changing local risk potentials comprise moving local risk potentials.

In a preferred embodiment, the one or more local risk potentials comprise static local risk potentials.

In a preferred embodiment, the one or more local risk potentials comprise temporarily varying local risk potentials.

In a preferred embodiment, the one or more local risk potentials are weighted by predetermined values.

In a preferred embodiment, the one or more local risk potentials are weighted by predetermined values and/or according to a predetermined spatial weighting function, in particular an exponential function.

In a preferred embodiment, the spatial distribution of one or more local risk potentials are given by a predetermined function, in particular an exponential function or sum of exponential functions.

Brief description of the figures

The features and advantages of the invention will be more completely understood by appreciating the following detailed description of preferred embodiments with reference to the figures, wherein

Fig. 1 depicts a schematic block diagram showing an overview of a method for providing local risk level information

Fig. 2 depicts schematically examples of local risk potentials

Fig. 3 depicts schematically further examples of local risk potentials

Fig. 4 depicts schematically an exponentially shaped risk factor

Fig. 5 depicts schematically an exponentially shaped safety factor

Fig. 6 depicts schematically a landscape of individual local risk levels

Fig. 7 depicts schematically an example of personal local risk level information on a display of a mobile device

Fig. 8 depicts schematically other examples of personal local risk level information on a display of a mobile device

Fig. 9 depicts schematically other examples of personal local risk level information on a display of a mobile device

Fig. 10 depicts a block diagram of a system implementing a method for providing risk level information

Detailed description

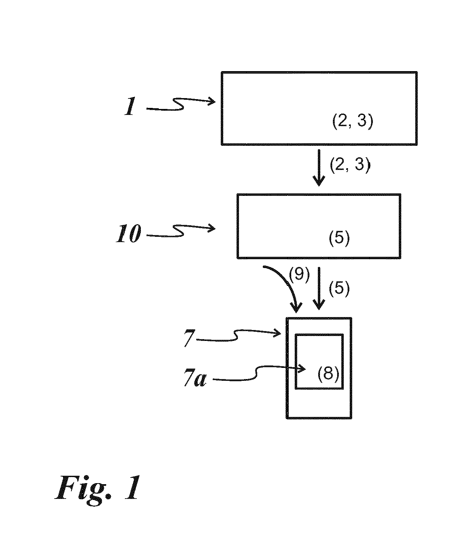

Figure 1 depicts an overview of a method for providing local risk level information. In a first step data on one or more local risk potentials 2, 3 are collected. Preferably, the data on one or more local risk potentials 2, 3 are collected by a database 1, which is in particular a cloud-based database 1. Figure 1 depicts database 1 which collects data on one more local risk potentials 2, 3. The local risk potentials 2, 3 comprise data which indicate a danger (negative local risk potential 2) and data which indicate a security (positive local risk potential 3). The data which indicate a danger are termed risk factors 2. The data which indicate a security are termed safety factors 3. In other words, a risk factor 2 is a local risk potential and a safety factor 3 is a local risk potential, of course another local risk potential than the risk factor 2. Thus, in other words, a local risk potential 2, 3 is either a risk factor 2 or a safety factor 3.

In preferred embodiments, the database 1 collects data about local risk potentials 2, 3 which are input by (a) user(s)s into one or more computer of the user(s) connected wirelessly or by wire with the database, e.g. one or more users at the respective user's homes or in an internet café.

In preferred embodiments, the database 1 is gathering data on one or more local risk potentials 2, 3 via search machines, e.g. computer programs searching for information implemented via computers connected (wirelessly or by wire) with the database 1, in the Internet. The database 1 might in particular, search social networks for information about local risk potentials 2, 3. The database 1 might search news or information websites in the Internet for information about local risk potentials 2, 3. The database 1 might derive information from official databases (like e.g. official crime statistics from police). The database 1 might implement the search for information about local risk potentials 2, 3 automatically, regularly, or in the occasion of an event, e.g. triggered by a user or a manager of the database 1 for implementing a search for information about local risk potentials 2, 3.

In preferred embodiments, the database 1 is fed manually with data about local risk potentials 2, 3 by one or more users or further persons, in particular users/ further persons who become aware of local risk potentials 2, 3 (e.g. by walking through the streets - and becoming aware of e.g. a slippery stair (risk factor 2) and/or of a cleaning person cleaning the stair (safety factor 3) - or listening to news in TV or radio) and put the information on local risk potentials 2, 3 into the database 1, in particular via a smartphone (or any mobile device) of the one or more users or via a further computer. For feeding the information into the database 1, the smartphone and/or the further computer might be connected wirelessly or by wire, via typical WAN, LAN, cellular and/or other networks which provide the communications connection to the database 1. Alternatively, the smartphone might be connected wirelessly or by wire to the computer and the computer might be connected wirelessly or by wire to the database 1.

In the exemplary embodiment, illustrated in figure 1, the database 1 provides information on the one or more local risk potentials 2, 3 to a server 10, which is in particular a cloud-based server 10. In this example, the server 10 generates individual local risk levels 5 out of the one or more local risk potentials 2, 3 and individual risk parameters of a user, namely the user of the mobile device 7, e.g. a smart phone, which is also depicted in figure 1. In this example, the individual risk parameters of the user have been also stored in the database 1. In this example, the server 10 retrieves the individual risk parameters of the user from the database 1. The server 10 transmits the data about the individual local risk levels 5 to the mobile device 7 which generates personal local risk levels 8 of the user of the mobile device 7 based on the individual local risk levels 5 of the user and a determined geographical location 9 of the user of the mobile phone 7 (as will be described in detail below). Furthermore, the mobile device 7 generates a map showing the personal local risk levels 8 of the user of the mobile device 7. The map is presented on the display 7a of the mobile device 7 of the user.

In preferred embodiments, the individual risk parameters of the user are stored in the mobile device 7 of the user. The mobile device 1 retrieves information about local risk potentials 2, 3 from the database 1 and calculates individual local risk levels 5 from the local risk potentials 2, 3 and individual risk parameters of the user. In this embodiment, the individual risk parameters of the user are kept into the mobile device 7 of the user and are not transmitted to the database 1 which provides the advantage that user does not need to provide his individual risk parameters to the database so that the data protection of the individual risk parameters of the user might be at least enhanced. In either case, the individual risk parameters of the user, stored in the mobile device 7 or in the database 1 might be protected against un-authorized access by data protection such as encryption, password etc.

In the following, the features risk factor 2, safety factor 3 and local risk levels 4 will be described by illustrative examples. A risk factor 2 is for example represented by a stair (or staircase), which is not clean, because there is ice on the stair and thus, there is a danger of falling when walking over the stair. A safety factor 3 is for example a person cleaning the stair by taking away the ice off the stair and thus eliminating or at least reducing the danger of falling when walking over the stair.

Preferably, as already indicated above, a danger which is caused by a risk factor 2 is reduced by a (corresponding) safety factor 3, if there is any present. A person cleaning a stair by taking away the ice is the safety factor 3 which reduces the danger caused by the risk factor 2 which is caused by the iced stair.

Preferably, a safety factor 3 can reduce a risk factor 2 only, if the safety factor 3 is specific for the risk factor 2, this means if the safety factor 3 is corresponding to the risk factor 2. For example, the risk factor 2 caused by the danger of a bank robbery can not be reduced by the safety factor 3 of a cleaning person, this is a cleaning person is not the specific (corresponding) safety factor 3 to a risk factor 2 caused by a danger of a bank robbery. Analogously, the safety factor 3 of a policeman is not the specific (corresponding) safety factor 2 for a risk factor 3 of an iced staircase, because usually the danger of the iced staircase is not reduced by the presence of a policeman, unless the policeman would give warning signals about the iced staircase.

Preferably, a local risk potential, namely a risk factor 2, and another local risk potential, namely a safety factor 3 corresponding to the risk factor, are summed up and thus result, in combination with possibly further local risk potentials 2, 3 at this location, in a local risk level 4 for this location. For example, the person cleans the stair by taking off the ice, the danger caused by the iced stair is eliminated. In this case, the safety factor 3 (cleaning person) eliminates the risk factor 2 (iced stair). In case, there is no other local risk potential 2, 3 at the location, where there is the stair, the local risk level 4 is zero, because the local risk level 4 at a location is the sum of the local risk potentials 2, 3 at said location.

However, for example, there could be another risk factor 2 at the location. For example, the location, where there is the stair is also a place where often dangerous persons are spotted. For example, the stair is a point where possibly dangerous people meet often, because the stair is located in a dark place. The dangerous people might be persons living on the street and occasionally rob a single person walking over the stair. Therefore, there is a risk factor 2 caused by the dangerous people at the stair.

In this context, it has to be noted that a risk factor 2 could be caused by a danger that bad things might happened, this danger could be an abstract danger or a concrete danger. A concrete danger in this case would be that dangerous people are actually at the location of the stair. An abstract danger in this case would be that dangerous people could be at the location of the stair, because dangerous people have been seen many times before at the location of the stair and therefore there is a certain possibility that there are dangerous people at the location of the stair.

In an example, the danger caused by dangerous people who are actually or might be at the location of the stair is a risk factor 2 at the location of the stair.

All risk factors 2 and safety factors 3 at a particular location are summed up to a local risk level 4 at said location.

In this example, the risk factor 2 caused by the iced stair, the risk factor 2 caused by the danger of the dangerous people at the location of the stair and the safety factor 3 given by the person cleaning the stair are taken into account for calculating the local risk level 4 at this location.

In this example, we assume that the person who is cleaning the stair only reduces the risk which is caused by the iced stair, but might not reduce the danger which is caused by the dangerous people who might be on the stair. This might be, because the cleaning person has already left the location of the stair, after the stair has been cleaned, and then dangerous people might arrive just at the moment when the user who takes advantage of the described method for providing local risk level information comes across walking at the location of the stair.

Thus, in this example, the local risk level 4 at the location of the stair is given by the risk factor 2 caused by the danger of the dangerous people at the location of the stair, because the risk factor 2 caused by the ice on the stair is eliminated by the person cleaning the stair and taking away the ice.

Thus, in preferred embodiments, local risk levels 4 are calculated based on the one or more local risk potentials 2, 3. In particular, the local risk levels 4 are calculated in a general way, this means a local risk level 4 has general signification which is valid for every person who might be walking at the location of the stair. In this case, it is assumed that the danger which is caused by the dangerous people is same for every person which intends walking at the location of the stair where dangerous people might be, because in this example it is assumed that the dangerous people might attack any person walking at said location, no matter if the person is young or old. In other words, the risk factor 2 which is given by the dangerous people results in a local risk level 4 having a general or common signification for anybody in regard of said location of the stair.

However, in preferred embodiments, the risk potentials 2, 3 have a signification which is not same for anybody, but which is different according to a particular person or user. For example, while the danger caused by an iced stair is a rather small danger for a young person, the same iced stair results to a rather big danger for an old person, because an old person will more likely fall, when walking on an iced stair and in case of falling on the stair, the old person will more likely suffer of injuries caused by a fall than a young person.

Therefore, in preferred embodiments, the local risk potentials 2, 3 are weighted by individual risk parameters of the user (person) taking advantage of using the method for providing local risk level information. In other words, the local risk potentials 2, 3 are personalized by data given from the user, which results in the calculation of individual local risk levels 5 (of the respective user).

Thus, in preferred embodiments, individual local risk levels 5 are calculated out of the local risk potentials 2, 3, and individual risk parameters of a user.

An individual risk parameter of a user is for example the age of the user, the gender of the user, a personal handicap such as a physical or mental handicap. Further, an individual risk parameter of a user might be a personal capability such as, if the user is able to swim or not. For example, a river, in particular with rising water, might be a danger for a user, who is not able to swim, but a rather small danger for a user who is a good swimmer. Thus, in an example, a risk factor 2 which is caused by a river will result in an individual local risk level 5 which is low for a user who is a good swimmer and will result in an individual local risk level 5 which is high for a user who is a poor swimmer.

In the described embodiment in context of the iced stair and the dangerous people at the location of the stair, there are, as described above, three local risk potentials 2, 3, namely two risk factors 2 and one safety factor 3. The risk factor 2 caused by the iced stair will result in a low individual risk level 5, because in our example, we assume that the user who is walking over the stair is a young person. In detail, the individual risk parameter of the user is the young age of the user. The risk factor 2 of an iced stair will lead to a small individual local risk level 5 based on a calculation out of the risk factor 2 of the iced stair and the individual risk parameter of the young age of the user.

In another example, the user might be an old person. The individual risk parameter of that user, this means the old age, will result in combination with the risk factor 2 of the iced stair in a high individual local risk level 5.

In the described example, it is assumed that the user is a person who is allowed to carry a weapon with himself, for example the user is a security person who has the right to carry a revolver with himself and actually takes the revolver with him. Therefore, the risk factor 2 caused by the danger of dangerous people at the location of the stair will in combination of an individual risk parameter of the user having a weapon and being able to use it will result in a rather low individual local risk level 5 in the context of the dangerous people.

In further exemplary embodiments, the individual risk parameter which is given from the right of a person to carry a weapon might be caused correspondingly by the strength of a person. E.g., a person who is very strong might be able to defend himself. Similarly, the ability of defending oneself, e.g. by karate or boxing might be an individual risk parameter because e.g. a boxer might be less in a danger situation when meeting potentially dangerous people than a weak person who can not defend himself.

In preferred embodiments, the presence of people who might help a person in a potentially dangerous situation might cause a positive risk potential 3, namely a safety factor 3. E.g., a bit amount of people who are able to protect a person in case of a dangerous attacker comes around present a safety factor 3, because the people, maybe just by the big number of people, might be able to chase an attacker away and even to scare a potential attacker and prevent him from any attack.

In a preferred embodiment, the one or more local risk potentials 2, 3 at a location, wherein the one or more local risk potentials 2, 3 are weighted by respective individual risk parameters of a user, are summed up to an individual local risk level 5 for said user at said location.

In the described example, the risk factor 2 of the iced stair results in principle (taken as such without considering the further local risk potentials 2, 3 at that location) in a high individual risk level 5 because of the individual risk parameter of the user being an old person. However, the risk factor 2 of the dangerous people results in a reduced individual risk level 5 of the user having a weapon and being able to defend himself. Further, there is the safety factor 3 of the person cleaning the stair. By summing up the local risk potentials 2, 3 (weighted by the applicable individual risk parameters of the user) the individual local risk level 5 of the location is calculated. In this example, the user is an old man, however having a weapon, therefore to the old man an iced staircase is in principle a big danger, whereas the man although being old is able to defend himself against dangerous people by means of his weapon. In detail, at the location of the iced staircase, there is the risk factor 2 of the iced staircase which is weighted by the individual risk parameter of the old age of the user. In addition, the weighted risk factor 2 of the iced staircase is reduced by the safety factor 3 of the person cleaning the stair. Further the risk factor 2 of the dangerous people is calculated in consideration of the individual risk parameter of the user having a weapon to defend himself.. In this example, the individual local risk 5 level will correspond to the risk factor 2 caused by the dangerous people weighted by the individual risk parameter of the user carrying a weapon, because the risk factor 2 by the iced stair is eliminated by the safety factor 3 of the person cleaning the stair.

In a preferred embodiment, the one or more local risk potentials 2, 3 comprise static local risk potentials 2, 3. In a preferred embodiment, one or more local risk potentials 2, 3 are always same, this means they do not vary. For example, a risk factor 2 is always the same over the time and at a given location. For example, a highway where there is always much traffic, same every day and every night, will have a high risk factor 2 which is same all days and all nights. In this case, the risk factor 2 might be termed a static risk factor.

In a preferred embodiment, one or more of the local risk potentials 2, 3 are static in regard of the location, but variable over time, i.e. temporarily varying local risk potentials 2, 3.

For example, the risk factor 2 caused by an iced stair is static at a location, namely at the stair, but varies over time. Generally in the night hours, the danger caused by an iced stair is higher than the danger caused by an iced stair during the day. The same applies for a slippery stair, where the danger may result from the wet slippery surface of the stair during the night hours, while during the day the sun will eliminate the wet and make the stair safe(r).

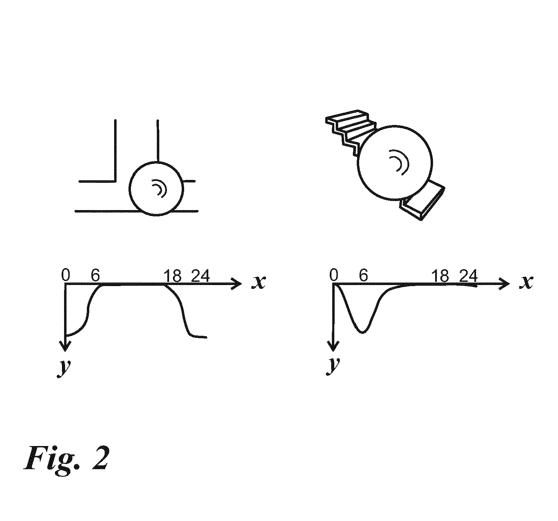

Figure 2 depicts two examples of a locally static, but timely varying risk factor 2. The upper left picture shows a street corner which (based on information of the crime statistic) has a high risk factor 2 during the evening and night hours. In the lower left picture, the diagram depicts the risk factor 2 on the y-axis y over the time which is indicated by the x-axis x. As the risk factor 2 is a negative local risk potential, the risk factor 2 is depicted as a negative value, which has a non-zero value during the night hours from 18:00 o'clock until 6:00 o'clock in the morning, and is close to zero from 6:00 o'clock in the morning until 18:00 o'clock in the evening.

Figure 2 shows in the right upper picture a staircase which is known to be very slippery during the morning hours so the risk factor 2 rises by amount (or modulus) on the negative y-axis around 6 o'clock in the morning. The high risk factor 2 of the slippery stair during the morning hours might be known from information from street sweepers maintaining that staircase, or emergency and/or hospital statistics, or it may be provided by other people regularly using that staircase, etc. The street sweepers or further people walking around that location might have provided by their mobile phones or via input in an internet portal this information to the database 1. Alternatively this information may be derived from data provided by sensors which are embedded into the surface of the staircase, or similar.

In an example, the individual local risk level 5 at the location of the stair has been caused by the iced staircase and by the dangerous people at the location of the staircase. In this example, it is assumed that at 4 o'clock a.m. the stair has been cleaned by a cleaning person so that at 6 o'clock, the stair is supposed to be still clean. However, since 5 o'clock, it is assumed that even more dangerous people might be at the location of the stair causing the risk factor 2 in regard of the dangerous people to rise. Therefore, to determine the individual local risk level 5 at the location of the stair at 5 o'clock the local risk level 5 at the location of the stair is re-calculated based on the temporarily changing local risk potentials 2, 3. The risk factor 2 caused by the iced stair is eliminated by the safety factor 3 caused by the cleaning person, but the risk factor 2 caused by the dangerous people has increased. Preferably, the individual local risk level 5 is re-calculated regularly or, if there is information about changing local risk potentials 2, 3 relevant for the individual local risk level 5 at a particular location.

In a preferred embodiment, one or more of the local risk potentials 2, 3 are dynamically changing and the individual local risk levels 5 are re-calculated based on the one or more dynamically changing local risk potentials 2, 3.

In a preferred embodiment, the one or more dynamically changing local risk potentials 2, 3 comprise moving local risk potentials 2, 3.

In this context, it has to be noted that what is described in the following for the local risk levels 4 applies for the individual local risk levels 5 correspondingly, and vice versa, what is described in the following for the individual local risk levels 5 applies for the local risk levels 4 correspondingly with the difference that for calculating the individual local risk levels 5 the individual risk parameters of a user are further taken into account which is not done for the local risk levels 4.

In preferred embodiments, the individual risk parameters might change dynamically. For example, an individual risk parameter is the old age of a user. In this case, the older the user is, the more the individual risk parameter of the old age of the user is increased. In another example, a user had an accident (e.g. broken leg) and has difficulty to walk. Therefore, an individual risk parameter caused by this handicap of the user is given. As soon as the user has overcome his injuries, the individual risk parameters of the broken leg is not given anymore.

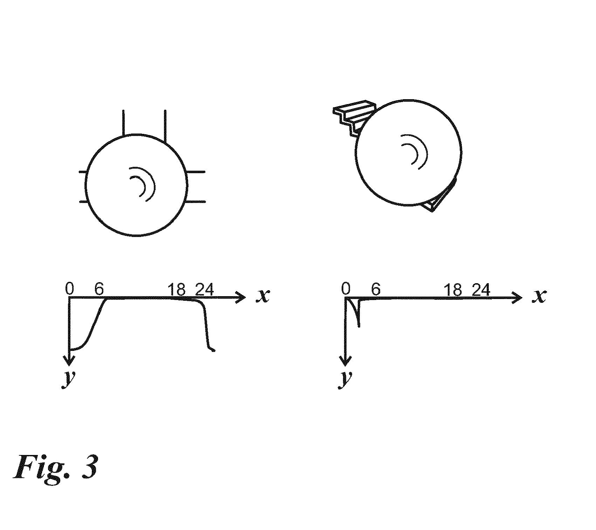

Figure 3 depicts an example for the effect of a dynamically changing moving positive local risk potential, this means a safety factor 3, given by a police man arriving and staying at a particular location.

The left upper picture of figure 3 shows a potentially dangerous street corner, which has in principle, as described in the context of figure 2 above, a high risk factor 2 during the night hours from 6 o'clock p.m. (18:00) until 6 o'clock a.m. (6.00). However, in this example at 6 o'clock p.m. (18:00) a police man comes around. The policeman is a moving safety factor 3, because around a policeman, e.g. within a circle of 500 meters around the policeman, the safety is enhanced. Therefore, as the policeman comes to the location of the potentially dangerous street corner, the policemen causes a safety factor 3 moving to the location. Therefore, the local risk level 4 (and corresponding the individual local risk level 5 of a particular user, see above note) calculated by the risk factor 2 of the potentially dangerous street corner and the dynamically changing safety level 3 caused by the moving policemen has to be re-calculated. The lower picture on the left side shows the diagram of the local risk level 2 at the location of the street corner. Because of the safety factor 3 caused by the policemen coming to the street corner at 6 o'clock p.m. (18:00), but leaving the street corner again at 12 o'clock p.m. (24:00) the local risk level 4 has been risen to a quite neutral level (almost zero at the x-axis).

The right picture in figure 3 shows a potentially slippery stair, which is not dangerous anymore from 4 o'clock in the morning, because of the cleaning person cleaning the stair at 4 o'clock in the morning. The cleaning person is a safety factor 3 which is dynamically changing, because the safety factor 3 only occurs, when the cleaning person comes and cleans the stair. Based on the event of the safety factor 3 by the cleaning person, the local risk level 4 at the location of the stair is re-calculated and results in that the local risk level 4 at the location of the stair is reduced to zero from 4 o'clock in the night until midnight. Actually, because of the low temperature or fog in the night, the stair becomes more and more slippery in the night after midnight resulting in the risk factor 2 of the stair to rise (negatively), until the cleaning person comes at 4 o'clock.

In a preferred embodiment, the one or more local risk potentials 2, 3 are weighted by predetermined values. This implementation of weighting local risk potentials 2, 3 by predetermined values, is similar to the embodiments of taking individual risk parameters into account. However, in contrast to the individual risk parameter which is dependent on a particular user, the predetermined values used in this embodiment for weighting a local risk potential 2, 3 is determined as a general applicable value. For example, a risk factor 2 which generally provides a big danger is weighted by a high value, while a risk factor 2 which generally provides a small danger is weighted by a low value. For example, a risk factor 2 of a danger caused by the traffic on a highway is weighted with a high value, while the risk factor of a danger caused by the traffic on a railway is weighted with a low value, because generally driving on a highway is more dangerous than driving in a train. In preferred embodiments, the step of explicitly implementing the step of weighting a local risk potential 2, 3 by a predetermined value is omitted, because the danger or the safety of the respective local risk potential 2, 3 is already expressed by the value of the respective local risk potential 2, 3. In other words, the weighting of a local risk potential 2, 3, by determining the amount of the risk or safety, respectively, might be implemented in an explicit weighting step or implicitly, when determining the local risk potential 2, 3.

In a preferred embodiment, the local risk potentials 2, 3 are scaled, in particular by numbers. In preferred embodiments, the risk factors 2 have a negative scale, with zero denoting no risk up to a negative number (e.g. - 20) denoting a high risk. For example, a negative number having a small modulus (e.g. - 10) denotes a medium risk (e.g.,

few dangerous people at a location), and a negative number having a high modulus (e.g. - 20) denotes a very high risk (e.g. many dangerous people at a location). Accordingly, preferably, the safety factors 3 have a positive scale, with zero denoting a neutral safety value up to a positive number (e.g. + 20) denoting a high safety. In this case, a positive number having a small modulus (e.g. + 10) denotes a medium safety (e.g., few policemen at a location), and a positive number having a high modulus (e.g. + 20) denotes a very high safety (e.g., many policemen at a location).

In preferred embodiments, a (negative) risk potential 2 can be calculated by a formula like risk potential (rp) = Function of crime rate (by day, daytime, ... ; from statistics), and/or risk potential (rp) = Function of accident rate (by day, daytime, ... ; from statistics), and/or risk potential (rp) = data from historical statistics by location, day, daytime, etc., and/or risk potential (rp) = function of environmental hazards (e.g. weather, local factors (desert, ocean, jungle), etc.), and any other combinations of these and more risk elements as described throughout this description.

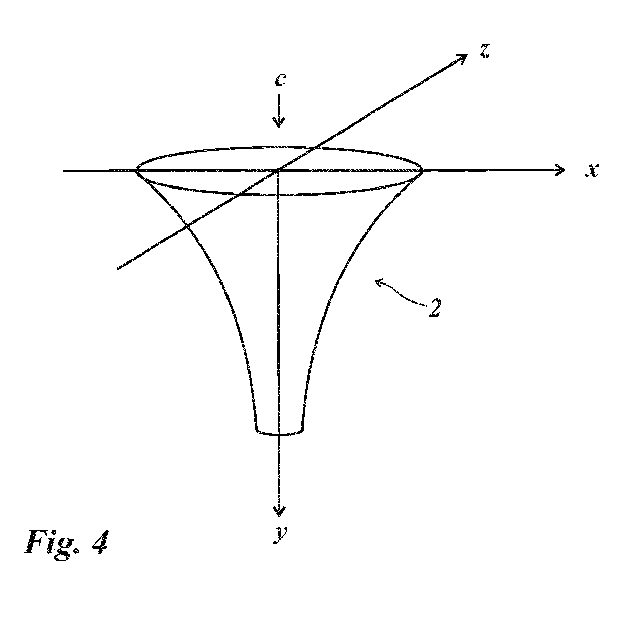

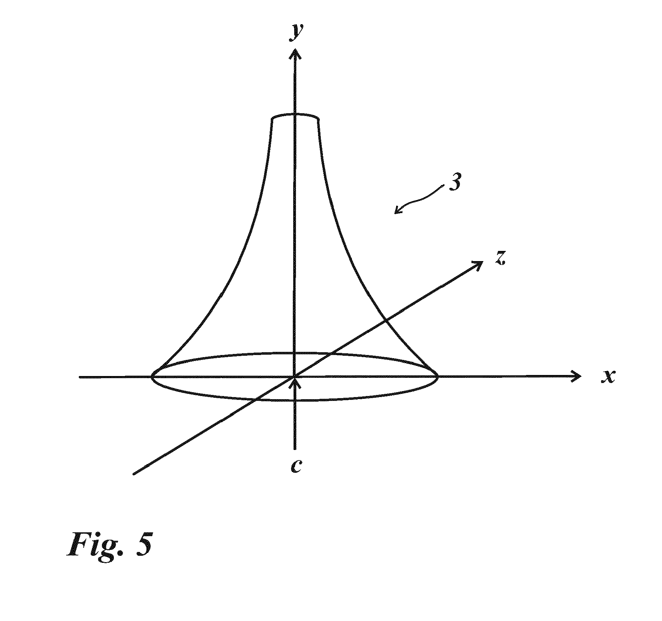

In a preferred embodiment, one or more local risk potentials 2, 3 are weighted according to a predetermined spatial weighting function, in particular an exponential function. For example, a local risk potential 2, 3 is determined as a relative risk potential 2, 3 as a function of the distance, wherein the amount of the local risk potential 2, 3 is determined by an exponential function which has its maximum amount in the centre of the location and is an exponential curve from the centre of the location to outwards of the location. This will be now described with reference to figures 4 and 5.

Figure 4 depicts a risk factor 2 which is given as a relative risk potential as a function of the distance between origin of risk and user position, having an exponential shape from the centre c of a risk location to outwards of the location. The risk factor 2 is a negative risk potential and the risk factor 2 is depicted as a three dimensional function having a centre c of a location in the middle and going in each direction (to the left, to the right, to the front, to the back and in any direction from the centre to outwards) and therefore, the shown risk potential 2 is a three dimensional exponentially shaped function. While actually, the distribution of risk parameters 2, 3 is a three dimensional function giving risk potentials 2, 3 at any point in a three dimensional space (length, width, height), in figure 4 for simplicity reasons, the risk potential distribution is depicted over a two dimensional area x, z and the level of the risk potential 2 (risk factor 2) is given on the y-axis. (Same applies for risk potential 3 (safety factor 3) in figure 5 below). In the figure 4, the area which is spanned by the x-axis x and the z-axis z includes all locations in a certain spatial distance and direction from the centre and the y-axis y indicates the amount of the negative risk factor 2 which is high (by modulus) on the centre c (wherein the centre c is placed in the crossing of the x- and z-axis, where the x and z values are zero, this means no distance from the centre c) and is indicated by a high modulus on the y-axis y with a negative scale (i.e. going downwards). In contrast, with increasing distance from the centre c (the x and/or z values are increasing accordingly), the risk factor 2 is getting smaller by modulus, this means is going upwards on the y-axis y. At a certain distance from the centre c, the risk factor 2 is zero which is indicated as the risk factor 2 is on the neutral level which is the most upper level or point on the y-axis y (in fig. 4 the most upper level or zero level of the y-axis is spanned by the x- and z-axis).

In figure 4, the risk factor 2 is for example caused by a dangerous person, for example a criminal who is at a moment situated at a particular location, here in the centre c. Therefore, at this location, the risk factor 2 given by the dangerous person is high, this is the risk factor 2 has a high modulus and thus, because it is a negative local risk potential, has a high negative value. The farer away from the location of the dangerous person, the less is the danger for somebody being attacked by the dangerous person, so that the modulus of the risk factor 2 is reduced with increasing distance from the location where the dangerous person is.. In the depicted example, it is assumed that the danger is reduced by the shape of an exponential function, until it reaches finally a neutral value. Thus, as the risk factor 2 is a negative local risk potential, the local risk potential increases from a maximum negative value in the middle (centre c) to a zero value indicating a neutral zone, where there is no more danger caused by the dangerous person in the centre. The neutral zone will be reached for example at 100 meters away from the dangerous person (located in the centre c), or one kilometre depending the chosen values for the exponential function describing how far the danger of the dangerous person is reaching. For example, a man having a pistol might have the same risk factor 2 in the centre of a location as a man having a gun, because at the centre the man with a pistol can kill someone in the same way as a man having a gun. However, a gun has a longer distance for shooting someone than the distance to shoot someone with a pistol. Therefore, the risk factor 2 given by a gun decreases less than the risk factor 2 given by a pistol. Therefore, in case of a gun the neutral zone might be reached only a 200 meters from the centre (location of the man having a gun), while in case of a pistol the neutral zone might be reached already at 50 meters from the centre (location of the man having a pistol).

In a preferred embodiment, in a homogenous environment the (negative) risk potential 2 (nRP = risk factor 2) may e.g. decrease exponentially with distance from the risk source (centre of the negative risk potential 2).

In a preferred embodiment, the risk factor 2 at a given location (x,z), which is determined here as a relative negative risk potential 2 having the value y, is calculated by the formula

$$y = nRP_{rel.} = A*exp(- (f_x*(x-x_0)^2 + (f_z*(z-z_0)^2)).$$

(with A<0)
where $nRP_{rel}$: Relative negative risk potential 2, here the risk factor 2

$x_0$ and $z_0$ : the coordinates of the negative risk source (origin of negative risk, or coordinates of centre c)

$f_x$ and $f_z$ : Functions that weight the negative risk potentials 2 in the area determined by the x and z-axis respectively (e.g. as described in the context of the weighting factors).

In figure 5, a safety factor 3 is depicted as a relative positive risk potential having a maximum safety value at the centre c indicated by the maximum modulus on the y-axis and decreasing in an exponential shape with the distance, i.e. with increasing x- and/or z-values, until the safety factor reaches the neutral zone or zero level, where the source of the safety factor 3 does not provide safety anymore. The source of the safety factor 3 might be a policeman and it is assumed that in a distance of 100 meters around the policeman the safety is enhanced with a maximum safety at the location where the policeman is located (in the centre c), decreasing exponentially with the distance from the policemen.

In a preferred embodiment, in a homogenous environment the positive local risk potential (pRP = safety factor 3) may e.g. decrease exponentially with distance from the safety factor 3.

In a preferred embodiment, the relative positive risk potential 3 having the value y at a given location (x,z), is calculated by the formula

$$y = pRP_{rel.} = A*\exp(- (f_x*(x-x_0)^2 + (f_z*(z-z_0)^2)).$$

(with A>0)
where $pRP_{rel}$: Relative positive risk potential 3, here the safety factor 3

$x_0$ and $z_0$ : the coordinates of the positive risk source (origin of positive risk, or coordinates of centre c) ;

$f_x$ and $f_z$ : Functions that weight particular (positive) risk potentials 3 in the area determined by the x and z-axis respectively (e.g. as described in the context of the weighting factors).

In preferred embodiments, the local risk level 4 is calculated according to the formula

$$\text{local risk level 4} = \sum nRP_{rel,,i} + pRP_{rel,j,}$$

where

$nRP_{rel}$: Relative negative risk potential 2, i.e. the risk factor 2, as a function of the distance from the location to the centre of the risk factor 2;

$pRP_{rel}$: Relative positive risk potential 3, i.e. the safety factor 3, as a function of the distance from the location to the centre of the safety factor 3;

i: variable of the local risk potential 2, 3, at a particular location

In a preferred embodiment, an individual risk level map is generated out of the calculated individual local risk levels showing a landscape of individual local risk levels.

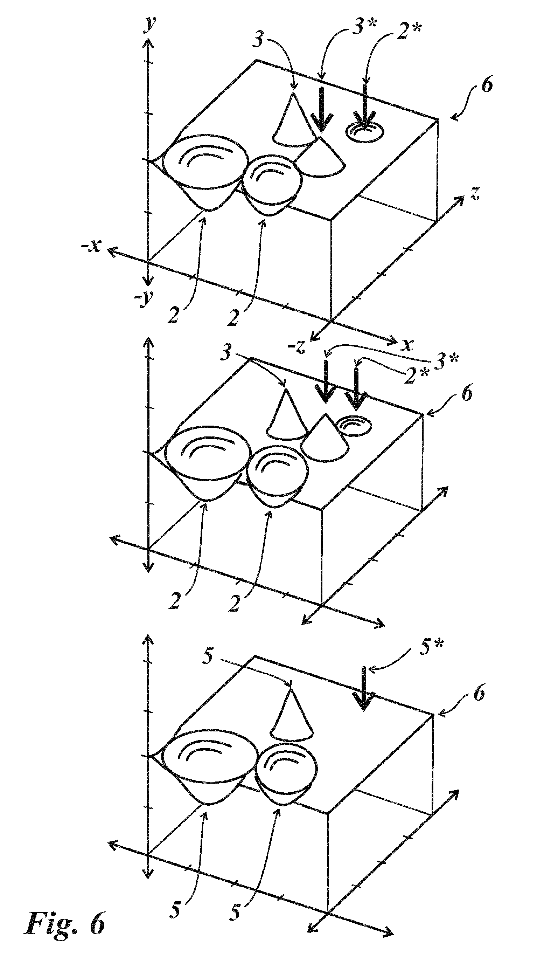

Figure 6 depicts an example of a landscape in the form of an individual risk level map 6. The individual risk level map 6 is depicted in a three picture sequence from up to down, because one or more of the depicted risk level potentials 2, 3 and resulting individual local risk levels 5 are dynamic. The local risk potentials 2, 3 and resulting individual local risk levels 5 depicted as exponentially shaped circles (a circle in the x- axis and z-axis determining the location and the exponentially shape measured on the y-axis determining the value of positive or negative value of the local risk potentials 2, 3 and the resulting individual local risk level 5). As already described, a individual local risk level 5 is the sum of the local risk potentials 2, 3 at a particular location (and further considering the individual risk parameters of a user as described above).

Figure 6 shows in a three pictures sequence (from top to down) a situation with 3 static negative local risk potentials 2, namely three static risk factors 2 of which one is indicated by 2*. Further there are two positive local risk potentials 3, namely one static safety factor 3 and one dynamic (moving) safety factor 3*. The moving safety factor 3* (e.g. coming policemen) is indicated by 3* and the corresponding static risk factor 2* (e.g. dangerous people at location) is indicated by 2* (this means the * indicates that safety factor 3* and the risk factor 2* are corresponding to each other). The moving safety factor 3* approaches the static risk factor 2* (middle picture) and finally neutralizes it (lower picture) indicated by the resulting individual local risk level 5* which is zero or neutral.

As can be seen also from the picture sequence, in case a negative local risk potential 2 (2*) is neutralized by a corresponding positive local risk potential 3 (3*), the individual local risk level 5 (5*) which is the sum of the local risk potentials at a particular location is zero, as far as there are no other local risk potentials 2, 3 at this location. In case there is only a negative local risk potential 2 or only a positive local risk potential 3 at a particular location, the individual local risk level 5 corresponds to said negative or positive local risk potential 2, 3, respectively (see figure 6, e.g. upper/middle and lower picture).

In further embodiments, in case (not depicted), two or more negative local risk potentials 2 (which are not reduced or eliminated/ neutralized by corresponding positive local risk potentials 3) are situated at a location, the individual local risk level 5 is the sum of these two or more negative local risk potentials 2. Similarly, in case two or more positive local risk potentials 3 (which are not reduced or eliminated/ neutralized by corresponding negative local risk potentials 2) are situated at a location, the individual local risk level 5 is the sum of these two or more positive local risk potentials 3.

In preferred embodiments, the local risk potentials 2, 3 are calculated and/or depicted in an abstracted manner, e.g. scaled by numbers. Therefore, two or more different negative local risk potentials 2 are summed to a negative individual local risk level 5. Correspondingly, two or more different positive local risk potentials 3 are summed to a positive individual local risk level 5. In case, there are negative and positive local risk potentials 2, 3 at a location, which are not corresponding (e.g. a risk factor 2 given by a iced stair and a safety factor 3 given by a policeman who can not prevent from slipping over the iced stair), preferably two or more (here two) individual local risk levels 5 are depicted at the location, one negative for the iced stair and one positive for the policeman).

In a further embodiment, in a quite abstracted manner, negative and positive local risk potentials 2, 3 might be summed up and thus reduce each other or even neutralized each other, even if the negative and positive local risk potentials 2, 3 are not corresponding, so that the risk factor 2 given by the iced stair is reduced or neutralized by the safety factor 3 given by the policeman at the location of the stair. However, preferably, as described above, only corresponding negative and positive local risk potentials 2, 3 are reducing each other when being summed up.

Preferably, local risk potentials 2 (risk factors 2) and local risk potentials 3 (safety factors 3) can only be summed up, if the respective risk factor 2 and the respective safety factor 3, are corresponding to each other, which might be defined as the risk factor 2 and the safety factor 3 belong to the same risk type. A safety factor 3 and a risk factor 2 belong to the same risk type, if the safety factor 3 is actually (in real life) able to reduce the danger caused by a risk factor 2. A risk type might be ice on a staircase, so that the risk factor 2 is the danger caused by the iced staircase and the safety factor 3 is the safety provided by a cleaning person cleaning the staircase. A safety factor 3 which might be summed up with a respective corresponding risk factor 2, because the safety factor 3 and the risk factor 2 belong to the same risk type, might be termed as specific safety factor 3. In preferred embodiments, one or more safety factors 3 might be summed up with one or more corresponding risk factors 2, if the safety factors 3 and the risk factors 2 belong to the same risk type. For example, a risk factor 2 caused by dangerous people might be summed up and thus reduced by a corresponding safety factor 3 caused by a group of helping people who might be able to protect a person against the dangerous people and by a further corresponding safety factor 3 caused by a policeman coming around.

A safety factor 3 which is not specific to a risk factor 2, because the safety factor 3 and the risk factor 2 do not belong to the same risk type, can not be summed up with said not corresponding risk factor 2. For example, the safety factor 3 caused by a policeman can not be summed up (and thus reduce or eliminate) the risk factor 2 caused by an iced staircase, because a policeman (safety factor 3) and an iced staircase (risk factor 2) do not belong to the same risk type, the presence of a policeman usually does not reduce the danger caused by an iced staircase, the policeman does not provide a safety factor 3 specific to the risk factor 2 of an iced staircase.

A negative local risk potential 2 and a positive local risk potentials 3 are corresponding in particular, if the positive local risk potential 3 is actually (e.g. in reality) able to reduce the danger which is caused by the negative local risk potential 2. E.g., a person cleaning a stair is the corresponding safety factor 3 for the risk factor 2 caused by the iced stair. A policeman is the corresponding safety factor 3 for the risk factor 2 caused by dangerous people at a location. However, a policeman usually is not the corresponding safety factor 3 for the risk factor 2 of an iced stair, because usually a policeman does not clean the iced stair and usually might not give any warning of an iced stair to people walking around. (In contrast, a policeman might be the corresponding safety factor 3 for the risk factor 2 which is caused by a dangerous crossroad, if the policeman is supposed to eliminate the danger of the dangerous crossroad or at least give warning information for surrounding cars or people approaching the dangerous crossroad).

In a preferred embodiment, the information about the one or more local risk potentials 2, 3 and/or the one or more local risk levels 4, in particular individual local risk levels 5, are presented by a mobile device 7 which might be termed personal safe guide. The mobile device 7 is preferably a smart phone. The mobile device 7 might also be a tablet computer, a personal digital assistant or a satnav terminal, i.e. a car navigation device, or a further mobile device appropriate to be used for implementing the method of providing local risk level information.

In a preferred embodiment, the information on local risk potentials 2, 3 and/or local risk levels 4, in particular individual local risk levels 5, is provided for the user of the mobile device 7. Preferably, the individual risk parameters used for calculating the individual local risk levels 5 are the individual risk parameters of the user of the mobile device 7. In further embodiments, individual risk levels 5 of a person different from the user of the mobile device 7 are depicted by the mobile device 7 based on the individual risk parameters of said different person.

Preferably, the one or more individual local risk levels 5 are further processed into personal local risk levels 8 as will be described below. This is done in particular by a mobile device 7 of the user of which the personal local risk levels 8 are generated and provided, in particular by the mobile device 7 of the user.

In a preferred embodiment, the mobile device 7 of the user provides pictures on a display indicating personal local risk levels 8. Alternatively or in combination, the mobile device 7 of the user provides acoustic signals indicating personal local risk levels 8.

The personal local risk levels 8 is information which is further personalized in regard of the individual local risk levels 5 in that the personal local risk levels 8 are processed, in particular calculated or selected, out of the individual local risk levels 5 and a determined geographical location 9 of the user. The geographical location 9 of the user might be determined based on one or more signals that are emitted and received by the mobile device 7. Preferably, the geographical location (or position) 9 of a mobile device 7 and thus of a user carrying the mobile device 7 is determined via GPS. Alternatively, any other location positioning system might be used for determining the geographical location 9 of the mobile device 7 and thus of the user carrying the mobile device 7. Based on the individual local risk levels 5 and the determined geographical location 9 of the user, personal local risk levels 8 are provided.

In a preferred embodiment, for determining the personal local risk levels 8, only those individual local risk levels 5 for the user are selected, which are at the determined location 9 of the user and/or on a particular way of the user from a determined location 9 of the user to a particular target which the user wants to reach. Preferably, the personal local risk levels 9 are a selection out of the individual local risk levels 5, wherein the selection out of the individual local risk levels 5 is determined by the geographical location 9 of the user.

In other words, the geographical location 9 of the user might be used to select the individual local risk levels 5 which are of interest for the user because they are in the adjacency of the user. Further, the user might input a desired goal or target place where the user wants to go, and the information about the geographical position 9 of the user in combination with the desired target are used to select the provided information of the individual local risk levels 5 as personal local risk levels 8 which are of interest for the user as they are nearby the way which the user has to go from its geographical position 9 to the target. Preferably, the mobile device 7 indicates one or several proposals of ways from which the user should choose, because the proposed ways have no or small risk thus avoiding places or ways which are rather dangerous for the user.

In a preferred embodiment, the mobile device 7 calculates individual local risk levels 5 based on the determined geographical location 9 of the user, this means the mobile device 7 calculates only those individual local risk levels 5 which are of interest based on the geographical location 9 of the user. In this embodiment, the individual local risk levels 5 which are calculated in consideration of the geographical location 9 of the user are the personal local risk levels 8 of the user.

In further embodiments, the mobile device calculates individual local risk levels 5 of the user without considering the geographical location 9 of the user and then selects those individual local risk levels 5 of the user which are of interest based on the user's geographical location 9 and provides said selected individual local risk levels 5 as personal local risk levels 8.

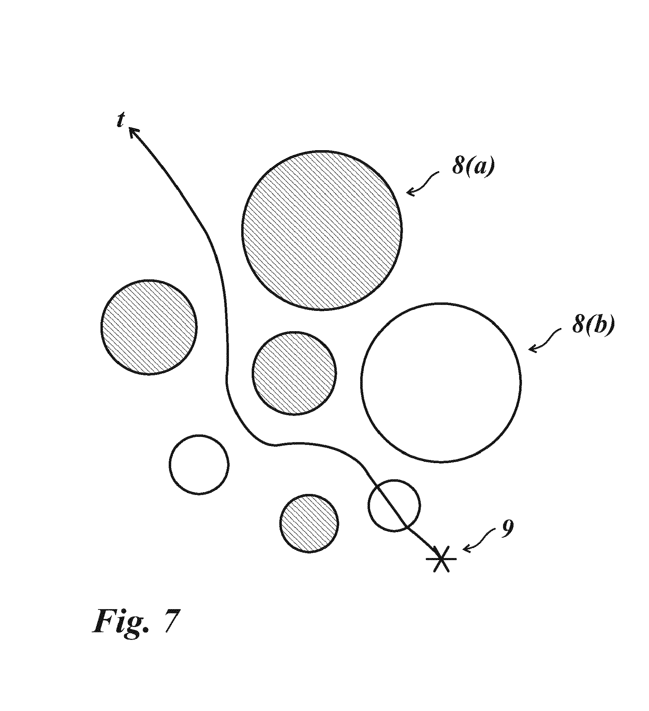

Figure 7 depicts an example of a particular map displayed by the mobile device 7. Figure 7 shows the geographical location 9 of the user and a proposed way from the geographical location 9 of the user to a target t. The proposed way avoids passing areas of personal local risk levels 8 which are indicated as dangerous as they are depicted as hatched circles 8(a). In contrast, the personal local risk levels 8 which are depicted as plain (not-hatched) circles 8(b) indicate that there is no danger, but even a safety zone.

Alternatively or in combination, a personal local risk level 8 which has a positive amount (safety) is depicted in a first colour, e.g. green, and a negative local risk level 8 which has a negative amount (danger) is depicted in a second colour, e.g. red.

Preferably, the amount of a personal local risk level 8 is indicated by the size of the circle. This means a big (green and/or not-hatched) circle indicates a big (positive) personal local risk level (safety), a big (red and/or hatched) circle indicates a big (negative) personal local risk level (danger), while a small (green and/or not-hatched) circle indicates a small (positive) personal local risk level (safety) and a small (red and/or hatched) circle indicates a small (negative) personal local risk level (danger).

Furthermore, preferably, the modulus of the risk levels is big at the centre of a circle and decreases as an exponential function from the centre of a particular personal risk level circle 8 to outwards as described in regard of the local risk potentials 2, 3 what applies analogously for the personal local risk levels 8.

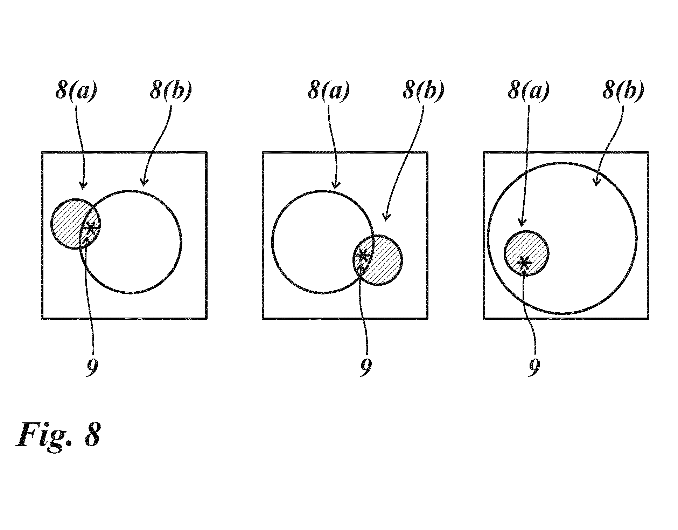

Figure 8 shows other examples of display content showing personal local risk levels 8 and a geographical location 9 of a user. The three pictures might be what is displayed by the mobile 7 device once the geographical location 9 of the user has been determined and the user wants to know, if the user is at a safe or dangerous place. In the left picture, the user is on the one hand in a dangerous area, as indicated by the hatched circle 8(a). However the dangerous zone 8(a) is overlapped by a safety zone 8(b), of which the safety eliminates the danger so that in the end the place where the user is located, is safe. In the middle picture, the danger of the dangerous zone 8(a) exceeds the safety of the safety zone 8(b), so that the user at his geographical location 9 is not safe and might be invited to leave this area. In the right picture, there is a large safety zone 8(b). However, the user is again in a dangerous zone 8(a) at the geographical location 9 and should leave this place.

In preferred embodiments, differentiating between dangerous personal local risk levels 8 and safe personal local risk levels 8 might be implemented by colours (e.g. red = dangerous, green = safe) or the way of presentation (e.g. hatched = dangerous, not hatched = safe) on the display 7a of the mobile phone 7. Alternatively or in combination, acoustic signals might be used to indicate safe and dangerous personal local risk levels 8. E.g. a nice tone or silence might indicate that the user's geographical location is in a safe personal local risk level 8, while an unpleasant tone indicates the user's geographical location is in a dangerous personal local risk level 8. If the user is on a way walking around, the tone might change from silence or a nice tone when passing a safe zone (safe or positive personal local risk level) to a unpleasant tone when passing a dangerous zone (dangerous or negative personal local risk level).

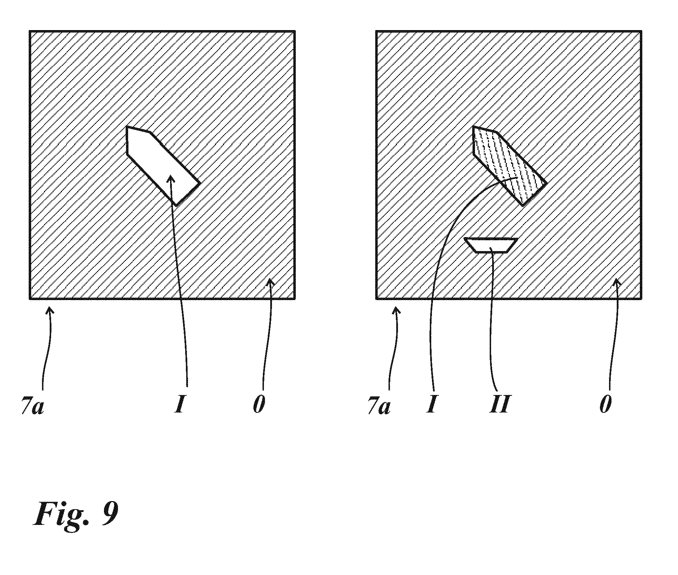

Figure 9 depicts another example of what might be displayed by the mobile device 7. Figure 9 shows on the left and right picture the display 7a of the mobile device 7 and a boat I in the surrounding ocean O. The ocean is indicated as a dangerous area, indicated by the hatched presentation, while the boat I on the left picture is indicated as a safe place (not-hatched). However, the boat I hits an iceberg, so that the boat loses its positive safety potential (and is now hatched indicating to be a dangerous place) and the user of the mobile device 7 will be informed to better reach for the rescue boat II, which is indicated as being safe (not-hatched).

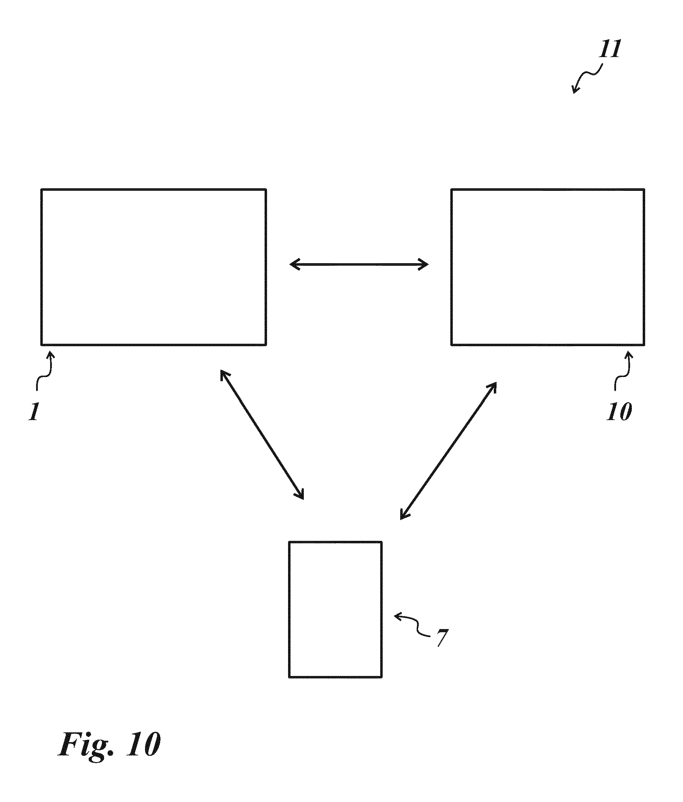

Figure 10 depicts a schematic diagram of the system 11. Figure 10 shows a more general presentation of the system 11 than the block diagram in figure 1.

In preferred embodiments, the system 11 comprises one or more of: a database 1, which is in particular a cloud-based database 1, a server 10, which is in particular a cloud-based server 10, and a mobile device 7. Preferably, the system 11 comprises the (cloud-based) database 1 and the mobile device 7 and optionally the (cloud-based) server 10.

In preferred embodiments, the, preferably cloud-based, database 1, the, preferably cloud-based, server 10 and the mobile device 7 transmit data between each other.

In a preferred embodiment, the geographical location 9 of the user is determined by the mobile device 7 and transmitted from the mobile device 7 to the cloud-based server 1. In this embodiment, the mobile device 7, in particular via GPS determines its own geographical position, and sends the geographical position to the cloud-based server 10 or to a cloud-based database 1 from which the cloud-based server 10 receives the data.

In a preferred embodiment, the cloud-based server 10 determines the geographical location 9 of the user by means of the mobile device 7. In this embodiment, the cloud-based server 10 is able to determine the geographical location 9 of the mobile device 7 based on signals that the mobile device 7 causes in operation or even in idle mode (e.g. when sending or receiving tones or specific positioning signals). The cloud-based server 10 determines the geographical location 9 of the mobile device 7 and thus of the user carrying the mobile device 7 and calculates the personal local risk levels 8 as described above in detail.

In preferred embodiments, all steps described as being implemented by the cloud-based server 11 are implemented instead by the mobile device 7.

In preferred embodiments, personal local risk levels 8, local risk levels 4, individual local risk levels 5 and/or local risk potentials 2,3 are provided in the form of a map showing a landscape on which the personal local risk levels 8, local risk levels 4, individual local risk levels 5 and/or local risk potentials 2,3, are depicted, in each case preferably for a determined area, which is in case of the personal local risk levels 5 even more specified by the geographical location 9 of the user. The landscape is in particular displayed on the display 7a of the mobile device 7. Thus, in particular embodiments, instead or in addition to personal local risk levels 8 the local risk levels 4, individual local risk levels 5 and/or local risk potentials 2, 3 are depicted in a landscape by e.g. one of the presentations as described throughout the description (e.g. even more colours or differently hatched circles according to the number of the depicted features). For example, the circles depicted in figure 7 might represent personal local risk levels 8, local risk levels 4, individual local risk levels 5 or local risk potentials 2, 3. For example, in figure 7, the hatched circles might indicate a negative personal local risk level 8, a negative local risk level 4, a negative individual local risk level 5 or a negative local risk potential 2 (risk factor 2). The plain circles might indicate a positive personal local risk level 8, a positive local risk level 4, a positive individual local risk level 5 or a positive local risk potential 3 (safety factor 3).

In a preferred embodiment, the personal local risk levels 8 of a user are calculated by the mobile device 7 of a user. The mobile device 7 receives data about local risk potentials 2, 3 from a cloud-based database 1 and implements the above described steps for calculating based on the data of local risk potentials 2, 3, of individual risk parameters and of the geographical location 9 of the user, the personal local risk levels 8 of the user.

In a preferred embodiment, the individual local risk levels 5 are calculated by a cloud-based server 10. The cloud-based server 10 receives data about local risk potentials 2, 3 from a cloud-based database 1 and calculates the individual local risk levels 5 based on the local risk potentials 2, 3 and individual risk parameters of a user. Before, the cloud-based server 10 received also the individual risk parameters. The user transmits the individual risk parameters of the user to the cloud-based database 1 from which the cloud-based server 10 receives the individual risk parameters of the user. Alternatively, the user transmits the individual risk parameters of the user, e.g. by the mobile device 7 of the user, to the cloud-based server 10.

As already stated, the database 1 is in particular a cloud-based database 1 and the server 10 is in particular a cloud-based server 10. However, in preferred embodiments, instead of a cloud-based server, a server 10 is used which is not implemented within a cloud. Correspondingly, in preferred embodiments, instead of a cloud-based database, a database 10 is used which is not implemented within a cloud.

In a preferred embodiment, the personal local risk levels 5 are calculated by a cloud-based server 10. In addition to calculating the individual local risk levels 5 of the user, the cloud-based server 10 calculates in this preferred embodiment also the personal local risk levels 8 of the user based on the geographical location 9 of the user and the data about the local risk potentials 2, 3 and/or the individual local risk levels 5 as described above in detail. The cloud-based server 10 receives the data about the local risk potentials 2, 3, individual local risk levels 5, individual risk parameters and/or geographical location 9 of the user from a cloud-based database 1. The cloud-based server 10 might receive the data about the individual risk parameters and/or geographical location 9 of the user from the user's mobile device 7.

In preferred embodiments, data on local risk levels 4, individual local risk levels 5 and/or personal local risk levels 8, after being calculated by the mobile device 7 and/or the server 10 are transmitted to the database 1 for storage. The mobile device 1 and/or the server 10 might retrieve the data on local risk levels 4, individual local risk levels 5 and/or personal local risk levels 8 stored at the database 1 from the database 1. Alternatively or in combination, the mobile device 7 and/or the server 10 stores data on calculated local risk levels 4, individual local risk levels 5 and/or personal local risk levels 8 in an own storage. The implementation of processing, in particular calculating, storing and/or transmitting data as described in this paragraph might be provided in addition or alternative to the data processing, data storage and data transmission as described throughout the description. In particular, the data on the local risk potentials 2, 3 are stored at the database 1 as described above and retrieved by the server 10 and/or the mobile device 7 for further processing as described above.

The invention is implemented in particular by means of a mobile device 7. The mobile device 7 comprises preferably a control unit and a data storage. The data storage is adapted to store data on local risk potentials 2, 3, individual risk parameters 4, local risk levels 4, individual local risk levels 5 and/or personal local risk levels 8. The mobile device 7 receives and/or processes, in particular calculates, one or more of the data as described throughout this description.

In an exemplary preferred embodiment, the mobile device 7 receives data on local risk potentials 2, 3 from a cloud-based database 1. The mobile device 7 has already data on individual risk parameters of the user of the mobile device 7 because the user puts this information into the mobile device 7, in particular via the display (if the display is adapted for input data via touch sensor) or via an interface (cable, USB-stick, any wired or wireless connection) to a users' computer where the user has stored this information. The mobile device 7 determines the geographical position 9 of the user by means of a GPS receiver or receives the geographical position 9 of the user from the cloud-based server 10 which determined the geographical position 9 of the user as described above. The mobile device 7, in particular by means of its controller, calculates the personal local risk levels 8 of the user based on data on one or more local risk potentials 2, 3, individual risk parameters of the user and geographical position 9 of the user. The mobile device 7 provides the information about the personal local risk levels 8 on the display 7a in the form of a landscape showing the personal local risk levels 8 of the user. Alternatively or in combination, the mobile device 7 shows information about local risk potentials 2, 3, local risk levels 4 and/or individual local risk levels 5 as a landscape on the display 7a of the mobile device.

Preferably, the mobile device 7 calculates individual local risk levels 5 which are of interest for the user based on the geographical location 9 of the user. When calculating the individual local risk levels 5, the geographical location 9 of the user is used in this embodiment to determine the value of risk factors 2 and/or safety factors 3 at the geographical location 9 of the user. In particular in case the risk factors 2 and/or safety factors 3 are determined as a function from a distance, e.g. having an exponential shape, the risk factors 2 and/or safety factors 3 result in individual local risk levels 5 having a value dependent on the geographical location 9 of the user according to the function(s) determining the value of the respective risk factors 2 and/or safety factors 3. In particular, one or more local risk potentials 2, 3 (risk factors 2, safety factors 3) might be overlapping at the geographical location of the user and the resulting personal local risk level(s) 8 is (are) determined as the individual local risk levels 5 (of which the values are derived from the respective function(s) of the risk factors 2 and/or safety factors 3 used to calculate the individual local risk levels 5 at the determined geographical location 9 of the user (and further along a way that the user intents to go to reach a target).

Preferably, the mobile device 7 indicates a proposed way from the geographical position 9 of the user to a target place where the user wants to go. The user has input into the mobile device 7 the desired target place. The mobile device might indicate a proposed way avoiding dangerous locations. Alternatively or in combination, the mobile device 7 sends warn signals to the user, in particular while the user is moving. The warn signals might be provided as colour on the display or as acoustic signals. For example, the warn signals indicate that there is a high person local risk level 8 nearby the user or in adjacency of the way that the user desires to go to reach his target place.

The invention might be implemented by the use of hardware, software or combination thereof. In particular, the mobile device 7 comprises a controller and a data storage. The controller might be implemented as a microprocessor in data connection with the data storage of the mobile device 7 and further in connection with the cloud-based database 1 and the cloud-based server 10 as described in the embodiments above. Furthermore, the mobile device 7, in particular by its controller, executes software to implement the described method.

Further, the cloud-based server 10 may be implemented as a single unit, a stand-alone device, or within a database, integrated in a computer and/or within a computer network. The cloud-based server 10 may be implemented through the use of hardware, software and/or hardware capable of executing software in association with appropriate software. The cloud-based server 10 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of cloud-based server 10 may be implemented as processing blocks in a software program. Such software may be employed in a digital signal processor, micro-controller, or general-purpose computer implemented as a single device or integrated in a computer network.

The cloud-based server 10 might comprise program code embodied in tangible media, such as magnetic recording media, optical recording media, solid state memory, floppy diskettes, CD-ROMs, hard drives, or any other machine-readable storage medium, wherein, when the program code is loaded into and executed in the cloud-based server 10, the cloud-based server 10 becomes an apparatus used for practicing the invention.

A system 11 is used for providing local risk level information, the system being adapted to collect data on one or more local risk potentials 2, 3 and to calculate local risk levels 4 based on the one or more local risk potentials 2, 3. The system 11 comprises one or more of: a cloud-based database 1, a cloud-based server 1 and a mobile device 7 of a user.

The cloud-based database 1 is used in particular for collecting data on one or more local risk potentials 2, 3. The cloud-based server 10 is used in particular for collecting individual local risk levels 5 based on the one or more local risk potentials 2, 3 and individual risk parameters of the user. The mobile device 7 is in particular used for providing information on personal local risk levels 8 of the user - calculated based on data on local risk potentials 2, 3 and a determined geographical location 9 of the user - in the form of a landscape and/or via optical and/or acoustic signals guiding the user on a safe track and avoid places having rather high risk levels.

The invention is a new method on assessment and increase of personal security, it gives more flexibility and safety. Other than established security mechanisms it uses static and dynamic information about the surroundings and provides an additional level of security. By a security application on a mobile device (e.g. smart phone), the mobile phone in connection with a (cloud-based) database features as a guardian angel for the user of the mobile device. Based on the location of the user of the mobile device and user-specific information, the user of the mobile device will get guidance or hint to escape out or to avoid a dangerous area/location.

## Claims

1. A method for providing local risk level information, the method comprising:

   - collecting, by a cloud-based database (1), data on one or more local risk potentials (2, 3);
   - calculating local risk levels (4) based on the one or more local risk potentials (2, 3).

2. The method according to claim 1, the method further comprising:

   - calculating individual local risk levels (5) from the one or more local risk potentials (2, 3) and one or more individual risk parameters of a user.

3. The method according to claim 2, the method further comprising:

   - generating an individual risk level map (6) from the calculated individual local risk levels (5) showing a landscape of individual local risk levels (5).

4. The method according to claim 2, the method further comprising:

   - providing, by a mobile device (7), pictures on a display (7a) of the mobile device (7) and/or acoustic signals generated by the mobile device (7) indicating personal local risk levels (8) calculated from the individual local risk levels (5) and a determined geographical location (9) of the user.

5. The method according to claim 4, wherein the personal local risk levels (8) are calculated by the mobile device (7).

**6.** The method according to claim 4, wherein the personal local risk levels (8) are calculated by a cloud-based server (10).

**7.** The method according to claim 4, wherein the geographical location (9) of the user is determined by the mobile device (7) and transmitted from the mobile device (7) to a cloud-based server (10).

**8.** The method according to claim 4, wherein a cloud-based server (10) determines the geographical location (9) of the user by means of the mobile device (7).

**9.** The method according to claim 1, wherein the step of collecting data on one or more local risk potentials (2, 3) comprises:

- gathering data about one or more risk factors (2), in particular based on weather conditions, crime statistics, experiences shared in community systems, road conditions, accident rates, wherein the one or more risk factors are based on previous, present and/or expected conditions; and
- gathering data about one or more safety factors (3), wherein a safety factor (3) reduces and/or eliminates a specific danger caused by a corresponding risk factor (2), wherein safety factors (3) comprise in particular a presence of police, of a street cleaning unit, of a maintenance entity, wherein the one or more safety factors (3) are based on previous, present and/or expected conditions.

**10.** The method according to claim 1, wherein calculating local risk levels (4) based on the one or more local risk potentials (2, 3) comprises:

- summing up the local risk potentials (2, 3) of a particular location of one or more locations to a respective local risk level (4) of said location.

**11.** The method according to claim 1, wherein the one or more risk potentials (2, 3) are dynamically changing local risk potentials (2, 3) and the local risk levels (4) are re-calculated based on the one or more dynamically changing local risk potentials (2, 3).

**12.** The method according to claim 1, wherein the one or more local risk potentials (2, 3) are weighted by predetermined values and/or according to a predetermined spatial weighting function, in particular an exponential function.

**13.** A software product adapted to execute the method according to claims 1 to 12, when executed on a computer.

**14.** A mobile device (7) comprising a control unit adapted to retrieve data on local risk potentials (2, 3) and to calculate individual local risk levels (5) based on the one or more local risk potentials (2, 3).

**15.** A system (11) used for providing local risk level information, the system (11) being adapted

- to collect data on one or more local risk potentials (2, 3); and
- to calculate local risk levels (4) based on the one or more local risk potentials (2, 3).

*1* ⟶ ⟶ 

(2, 3)

↓ (2, 3)

*10* ⟶ ⟶ 

(5)

(9) ↓ (5)

*7* ⟶ ⟶ 

*7a* ⟶ (8)

**Fig. 1**

**Fig. 2**

**Fig. 3**

*Fig. 4*

**Fig. 5**

Fig. 6

**Fig. 7**

*Fig. 8*

*Fig. 9*

*11*

*1*

*10*

*7*

**Fig. 10**

Europäisches
Patentamt
European
Patent Office
Office européen
des brevets

## EUROPEAN SEARCH REPORT

Application Number

EP 14 29 0256

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/161116 A1 (PEAK DAVID F [US] ET AL) 30 June 2011 (2011-06-30) * page 3 - page 10; figures 1,3a,3b,4a,8, * ----- | 1-15 | INV. G06Q10/06 H04W4/02 |
| A | US 8 612 139 B2 (WANG JENNE-TAI [US] ET AL) 17 December 2013 (2013-12-17) * page 5 - page 9; tables 2-5 * ----- | 10,12 | |
| A | US 2013/165153 A1 (TURK DOUGLAS R [US] ET AL) 27 June 2013 (2013-06-27) * figures 1,9 * ----- | 1-15 | |

TECHNICAL FIELDS
SEARCHED (IPC)

G06Q
H04W

The present search report has been drawn up for all claims

| Place of search | Date of completion of the search | Examiner |
|---|---|---|
| Munich | 12 February 2015 | Jardak, Christine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 2 991 006 A1**

## ANNEX TO THE EUROPEAN SEARCH REPORT
## ON EUROPEAN PATENT APPLICATION NO.

EP 14 29 0256

12-02-2015

| Patent document cited in search report | | Publication date | Patent family member(s) | | Publication date |
|---|---|---|---|---|---|
| US 2011161116 | A1 | 30-06-2011 | US | 2011161100 A1 | 30-06-2011 |
| | | | US | 2011161116 A1 | 30-06-2011 |
| | | | US | 2011161117 A1 | 30-06-2011 |
| | | | US | 2011161118 A1 | 30-06-2011 |
| | | | US | 2013346115 A1 | 26-12-2013 |
| US 8612139 | B2 | 17-12-2013 | CN | 102538811 A | 04-07-2012 |
| | | | DE | 102011085893 A1 | 31-05-2012 |
| | | | US | 2012136567 A1 | 31-05-2012 |
| US 2013165153 | A1 | 27-06-2013 | NONE | | |

EPO FORM P0459